# EUROPEAN PATENT SPECIFICATION

(11) **EP 1 505 116 B1**
(45) Date of publication and mention of the grant of the patent: **03.06.2009**
(21) Application number: 04254454.4
(22) Date of filing: 26.07.2004
(51) Int. Cl.: C08L 23/08, C08L 11/00, C08L 23/34, C08L 23/10, C08L 23/22, C08L 71/03, C08K 5/01, C08K 5/12

(54) **Radiation resistant cross linked polymer compositions and radiation resistant polymer products**
Strahlungsbeständige vernetzte Polyolefinzusammensetzung und daraus hergestellte Artikel
Composition de polyoléfine réticulés, résistante aux rayons et articles produits à partir de celle-ci

(30) Priority: 31.07.2003 JP 2003283989
(43) Date of publication of application: 09.02.2005
(73) Proprietor: JAPAN ATOMIC ENERGY RESEARCH INSTITUTE, Kashiwa-shi, Chiba-ken 277-0842 (JP); HAYAKAWA RUBBER COMPANY LIMITED, Fukuyama-shi, Hiroshima-ken 721-8540 (JP)
(72) Inventor: Kusano, Joichi, Cntr Proton Accelerator Facilities, Tokai-mura Naka-gun Ibaraki-ken 319-1195 (JP); Masukawa, F., Cntr Proton Accelerator Facilities, Tokai-mura Naka-gun Ibaraki-ken 319-1195 (JP); Nakatukasa, Sadayoshi, Hayakawa Rubber Co., Ltd., Fukuyama-shi, Hiroshima-ken, 721-8540 (JP); Tabasaki, Takesi, Hayakawa Rubber Co., Ltd., Fukuyama-shi, Hiroshima-ken, 721-8540 (JP)
(74) Representative: Paget, Hugh Charles Edward

(56) References cited:
- GB-A- 1 470 464
- US-A- 4 373 046
- US-A- 5 955 519
- PATENT ABSTRACTS OF JAPAN vol. 0170, no. 63 (C-1024), 8 February 1993 (1993-02-08) & JP 4 268351 A (MITSUBISHI CABLE IND LTD), 24 September 1992 (1992-09-24)
- PATENT ABSTRACTS OF JAPAN vol. 0135, no. 62 (C-665), 13 December 1989 (1989-12-13) & JP 1 234452 A (FURUKAWA ELECTRIC CO LTD:THE), 19 September 1989 (1989-09-19)

## Description

### BACKGROUND OF THE INVENTION

### 1. Field of the Invention

The present invention relates to a radiation resistant cross linked polymer composition in nuclear related facilities such as nuclear power plants, facilities for reprocessing of used nuclear fuel and proton accelerators, for example in polymer products used as various kinds of cables, packings, water cut-off materials.

### 2. Related Art Statement

There have been proposed various kinds of compositions as a polymer used for facilities relating to nuclear power. Such known polymer compositions are described in, for example, Japanese patent No. 2 8 9 3 3 6 0 B, Japanese Patent examined publication No. 8-869, Japanese patent publication 8-1 5 1 4 9 0 A and an article of "Hitachi Cable", No. 9 (1990-1), pages 77 to 82 "Development of an ultra radiation resistant cable".

JP-A-4-268351 describes a radiation resistant cross-linked polymer composition comprising 95-50 wt% chlorosulfonated polyethylene and 5-50 wt% epichlorohydrin or copolymer thereof with ethylene oxide, and also 10-80 parts wt. process oil.

### SUMMARY OF THE INVENTION

There has been demanded still further improved radiation resistance in recent years. As a specific radiation dope, it is required that a polymer maintain an appropriate hardness and bending properties after the polymer is exposed to radiation of, for example, about 5 MGy to 10 MGy. When a polymer composition is subjected to radiation of such high dose level, the polymer composition is deteriorated due to hardening or softening. It has been thus almost impossible to obtain general properties exposed as a polymer composition.

An object of the present invention is to provide a use of a radiation resistant polymer composition for maintaining appropriate hardness and bending properties after it is exposed to radiation.

The present invention provides use of a radiation resistant cross linked polymer composition as set out in claim 1.
Particular use of the radiation resistant cross linked polymer, in accordance with the invention, is in a product which is a distribution line, a power cable, a communication cable, a sheath, a water cut-off material or a packing.

Using the radiation resistant cross linked polymer composition of the present invention, it is possible to maintain appropriate hardness and physical properties after exposure to radiation. The radiation resistant cross-linked polymer composition may be applied to polymer products requiring radiation resistance such as those for nuclear related facilities. It is thereby possible to considerably improve the hardness and bending properties after the exposure to radiation compared with those made of compositions previously reported. The present invention is thus very useful in a field of engineering.

The radiation resistant cross-linked polymer composition used in the present invention will be described further in detail below.
When a polymer composition is used under circumstances with radiation exposure, the polymer composition is normally exposed to a low dose of radiation over a long time period. Various polymers are thereby deteriorated in the performances and properties due to the exposure to radiation. As a polymer is exposed to radiation, the cross linkage and fragmentation of polymer chains occur at the same time. A polymer may be divided into two categories; cross linking and decomposition types, as which of the cross linking and fragmentation is dominant during the exposure. The cross linking type polymer includes natural rubber, chloroprene rubber, ethylene-propylene rubber, isoprene rubber, styrene-butadiene rubber, butadiene rubber, acrylonitrile-butadiene rubber, polyethylene The decomposition type polymer includes polyisobutylene rubber, butyl rubber, epichlorohydrin rubber and polypropylene. The cross linking type polymer becomes hard and brittle due to a reduction of elongation and an increase of modulus. The decomposition type polymer becomes brittle due to reduction of tensile strength, elongation and hardness.

The solution for preventing deterioration due to exposure to radiation provided by the present invention is based on a novel concept substantially different from known solutions in the art. It has been proposed to add protectants into a radiation resistant polymer so that the species, combination and amounts of the protectants are adjusted. This method is expected to be useful to some degree against a low dose of radiation. This method is, however, proved to be ineffective against a high dose of radiation. Specifically, it has been recently reported that some polymers with specific properties are superior to prior compositions in the art. For example, when such recently reported polymer composition applying the above method may have a breaking elongation at blank of 400 percent or higher, the breaking elongation is reduced to about 20 percent after it is exposed to radiation of 10 MGy. When the breaking elongation is considerably reduced as such, however, it is not appropriate from the viewpoint of bending properties.

The inventors have tried to present a novel concept and perform radiation exposure tests seeking for a substantial breakthrough, and have reached the following novel composition. That is, known radiation resistant polymers previously reported include ethylene-propylene polymer and chloroprene rubber. Such radiation resistant polymer is deteriorated in the hardness after it is exposed to a high dose of radiation, so that its bending properties are lost. An appropriate amount of softening deterioration type polymer such as butyl rubber or isobutylene polymer is mixed to the above described hardening deterioration type polymer. It is proved that the deterioration processes due to cross linking and decomposition of the polymer composition may proceed at the same time, so that apparent changes of properties such as surface hardness can be successfully minimized.

These and other objects, features and advantages of the invention will be appreciated upon reading the following description of the invention when taken in conjunction with the attached drawings.

### Preferred embodiments of the invention

According to the present invention, in 100 weight parts of polymer components, 3 to 70 weight parts of a first polymer component of at least one polymer selected from butyl rubber and polyisobutylene rubber and 97 to 30 weight parts of a second polymer component of one or more polymers selected from chloroprene rubber and an ethylene-propylene rubber are blended. Preferably the polymer components of the composition consist of the first polymer component and the second polymer component in a total amount of 100 parts by weight, but if desired other polymer component or components may be included up to a maximum amount of 20 parts by weight (more preferably not more than 10 parts by weight), provided that the total of all the polymer components is 100 parts by weight.

The polymer composition can be properly and controllably degraded with decomposition by adjusting the total content of the first polymer component to 3 weight parts or more. It is thus possible to prevent increases of surface hardness and modulus and a reduction of elongation due to cross linkage degradation of the second polymer component. From this viewpoint, the total content of the first polymer component is 3 weight parts or higher and preferably be 5 weight parts or higher.

The reduction of surface hardness, modulus and breaking properties of the polymer composition can be prevented by adjusting the total content of the first polymer component to 70 weight parts or lower. From this viewpoint, the total content of the first polymer component is 70 weight parts or lower, and preferably 40 weight parts or lower.

Many cross linking type polymer are known other than the above listed chloroprene and a polymer containing ethylene units as the main component applied as the second polymer component according to the present invention. When some cross linking type polymers not listed are used, it is proved that the properties such as breaking strength of the polymer composition is considerable. The characteristic performances of the composition of the present invention cannot be obtained.

The first polymer component is of a polymer selected from butyl rubber and polyisobutylene rubber, or a mixture thereof.

Butyl rubber means a copolymer of isoprene and isobutylene. Although various grades of butyl rubbers are produced and commercialized depending on the polymer composition, molecular weight, the polymer composition and molecular weight are not particularly limited.
Polyisobutylene rubber is a polymer substantially composed of isobutylene, and the molecular weight is not particularly limited.

The second polymer component is composed of a polymer selected from chloroprene rubber and an ethylene-propylene rubber, and a mixture thereof.
In the ethylene-propylene rubber 30 mole percent or higher, preferably 40 mole percent or higher, of the monomer units are occupied by ethylene units. The polymer may be a two-component copolymer of ethylene and propylene, or a multi-component polymer (such as terpolymer and tetramer) of ethylene, propylene and other monomer(s). In the case of ethylene-propylene series polymer, it is preferred that propylene units occupy 20 mole percent or more of the whole monomer units. The other monomer includes ethylidene norbornene, dicyclopentadiene, 1,4-hexadiene and vinylidene norbornene.

According to the present invention, 3 weight parts or more of a softening agent is added to 100 weight parts of polymer components. It is thereby possible to prevent the deterioration due to hardening of the polymer composition. From this viewpoint, the total content of the softening agent is 3 weight parts or more, and preferably be 10 weight parts or more. Although the upper limit of amount of the softening agent is not particularly defined, it may be 100 weight parts or lower, for example.

The "softening agent" is a general terminology of additives added to the composition for reducing the hardness of a polymer. The "softening agent" includes a so-called plasticizer. The softening agent has high compatibility with a polymer and may penetrate into the molecular chains to function as a kind of a lubricator between the molecular chains.
The softening agent includes a mineral oil softening agent, a vegetable oil softening agent, and a synthetic softening agent (synthetic plasticizer).
The mineral oil softening agent may be categorized into aromatic, naphthene and paraffin systems. Mineral oil softening agents available are normally composed of a mixture of these three systems.

According to a preferred embodiment, the softening agent is a mineral oil softening agent having an aniline point of 60 °C or lower. An aniline point is used as a scale for indicating the content of aromatic structure such as benzene ring in the softening agent. Within the present invention, it is possible to effectively prevent the deterioration due to hardening of a polymer composition, by applying a softening agent having an aniline point of 60 °C or lower (more preferably 45 °C or lower). Such softening agent includes the followings.
For example, "AC" and "AH" series supplied by Idemitsu Kosan Co.,Ltd., "HA" series supplied by KOBE OIL CHEMICAL INDUSTRIAL Co., Ltd., and products supplied by COSMO OIL CO., LTD., JAPAN ENERGY CORPORATION, Japan Sun Oil Company Ltd., FUJI KOSAN CO.,LTD .

A plasticizer is a general terminology of synthesized agents among the softening agents. The kind of the plasticizer is not limited, and may preferably be a polyvalent carboxylic ester plasticizer. Particularly preferably, an aromatic polyvalent carboxylic ester plasticizer is used. Such polyvalent carboxylic acid may preferably have a benzene ring therein such as terephthalic acid, isophthalic acid or trimellitic acid. An alcohol to be reacted with the polyvalent carboxylic acid may be methanol, ethanol, butanol, pentanol, hexanol, octanol, ethyl hexanol, octanol, caprylic alcohol, nonanol, isononyl alcohol, decanol, isodecyl alcohol, undecyl alcohol, lauryl alcohol, tridecyl alcohol, benzyl alcohol, or cyclohexanol. More preferably, the plasticizer may be a phthalic acid series plasticizer such as DOP (di-2-ethyl hexyl phthalate), DBP (dibutyl phthalate), BBP (butyl benzyl phthalate) ; or trimellitic ester series plasticizer such as TBTM (tributyl · trimllitate), TOTM (tri · 2-ethyl hexyl · trimellitate).

In the polymer composition used in the present invention, protectants known in radiation resistant polymer specifications may be used. Such protectants includes electron · ion capturing agents, energy transfer agents, antioxidants, radical capturing agents and radical inactivating agents.

The electron · ion capturing agents include pyrene, quinone, diphenylenediamine, tetramethyl phenylenediamine. The energy transferring agents include acenaphthene, acenaphthylene. The radical capturing agents include mercaptan, phenyl ether, and hydrophenanthrene. The antioxidants include various kinds of phenols and an organic thioate.

Various kinds of compounding agents and additives may be added to the polymer composition used in the present invention. Specifically are listed various kinds of cross linking agents required for cross linkage, a cross linkage accelerator, stearic acid, a cross linkage aid such as zinc oxide, an age resistor of phenolic series, amine series and quinone series, an ultraviolet absorbent such as benzophenone, hindered amine benzotriazole, and salicylic acid derivative, a filler such as calcium carbonate, clay, magnesium carbonate , a reinforcing agent such as carbon black, silica and surface treated calcium carbonate, the other processing aids, a foaming agent, a flame retarder, a colorant, a tackifier and so on. Although sulfur is used as a cross linking agent in many rubber compositions, other metal oxides and organic peroxides may be used in the composition of the present invention.

### EXAMPLES

The present invention will be described further in detail referring to the following examples of composition usable in the invention and comparative examples.
Each of blending compositions shown in table 1 was kneaded with a pressure kneader having a volume of 1 liter at 100 °C for 20 minutes to obtain kneaded blend, which was then rolled by a 6-inch open roll to obtain a sheet shaped sample having a length of 2 mm. The sample was then vulcanized and shaped by a press at 170 °C for 20 minutes. The samples 1 to 4 shown in table 1 were within the present invention and the samples 5 to 7 were not within the present invention. Further, each blend shown in table 1 was shown as a reference numeral in a parenthesis. The reference numeral in each parenthesis corresponds to each reference numeral shown in table 2.

**Table 1**

| | | | | | Not invention | | |
|---|---|---|---|---|---|---|---|
| Composition | 1 | 2 | 3 | 4 | 5 | 6 | 7 |
| EPDM (1) terpolymer | 8 0 | 1 0 | 6 0 | 9 3 | 9 8 | 0 | 2 5 |
| C S M (2) chlorosulfonated polyethylene | 5 | 0 | 0 | 0 | 0 | 6 5 | 0 |
| B - 1 0 (3) chloroprene | 0 | 5 0 | 0 | 0 | 0 | 0 | 0 |
| Second polymer Component | 8 5 | 6 0 | 6 0 | 9 3 | 9 8 | 6 5 | 2 5 |
| I IR (4) butyl/rubber | 15 | 40 | 40 | 7 | 2 | 3 5 | 7 5 |
| I B R (5) polyisobutyl rubber | 0 | 5 | 0 | 0 | 0 | 0 | 0 |
| First polymer Component | 1 5 | 4 5 | 4 0 | 7 | 2 | 35 | 75 |
| Softening Agent ( 6 ) | 1 5 | 30 | 0 | 2 8 | 20 | 1 | 1 0 |
| Plasticizer ( 7 ) | 0 | 1 0 | 3 0 | 0 | 2 0 | 0 | 4 0 |
| Total content Of (6) and (7) | 1 5 | 4 0 | 3 0 | 2 8 | 4 0 | 1 | 5 0 |
| Carbon (8) | 3 5 | 5 0 | 0 | 5 | 5 0 | 4 5 | 0 |
| Silica ( 9 ) | 5 | 0 | 50 | 2 0 | 0 | 1 0 | 3 0 |
| Clay (10) | 0 | 2 0 | 5 0 | 0 | 0 | 1 0 | 5 0 |
| Additives (11)∼(14) | 9 | 9 | 8 | 15 | 8 | 7 | 6. 5 |
| Stearic acid (15) | 1 | 1 | 1 | 1 | 1 | 1 | 1 |
| Zinc white ( 1 6 ) | 5 | 5 | 5 | 5 | 5 | 5 | 5 |
| MgO(17) | 0. 5 | 3 | 1. 5 | 0 | 0 | 3. 5 | 0 |
| Sulfur ( 1 8 ) | 1. 5 | 0 . 5 | 1 | 2 | 1. 5 | 0 . 6 | 1. 5 |
| Accelerator (19)∼(22) | 4. 3 | 2 | 4. 8 | 4 . 6 | 3 . 7 | 3 . 2 | 4 . 5 |

**Table 2**

| < materials for use > | | |
|---|---|---|
| *(1) | EPDM #4045 | Mtsui Chemicals, Inc. |
| *(2) | Hypalon #40 | SHOWA DENKO KK |
| * (3) | B-10 | TOSOH CORPORATION |
| * (4) | IIR #268 | JSR |
| * (5) | Vstanex L-140 | Exxon |
| * (6) | AH-16 | Idemitsu sekiyu |
| * (7) | DOP | Daihachi Chemical Industry Co., Ltd |
| * (8) | Asahi #60 | Asahi Carbon |
| * (9) | Nipp Seal AQ | Japan silica industry |
| * (10) | Dixie Clay | Vander Bilt |
| * (11) | Bio Soap 100 | KYODO CHEMICAL CO.,LTD. |
| * (12) | Adecus tab LA-32 | Asahi Denka Co., Ltd. |
| * (13) | Noklak CD | OUCHISHINKO CHEMICAL INDUSTRIAL CO., LTD. |
| *(14) | Noklak 8C | OUCHISHINKO CHEMICAL INDUSTRIAL CO., LTD. |
| *(15) | Lunak S-20 | Kao corporation |
| *(16) | zinc white 3 | Shodo chemical |
| * (17) | Magnesium oxide #150 | Kyowa Chemical |
| * (18) | Sutfax PS | Tsurumi Chemical Industry |
| * (19) | Noksellar M | OUCHISHINKO CHEMICAL INDUSTRIAL CO., LTD. |
| * (20) | Noksellar TT | OUCHISHINKO CHEMICAL INDUSTRIAL CO., LTD. |
| * (21) | Noksellar BZ | OUCHISHINKO CHEMICAL INDUSTRIAL CO., LTD. |
| *(22) | Accel 22-S | Kawaguchi Chemical |

As shown in table 1, "EPDM" represents a terpolymer of ethylene, propylene and diene, "CSM represents chlorosulfonated polyethylene, and "B-10" represents chloroprene rubber. These three components belong to the second polymer component. "IIR" represents butyl rubber, and "IBR" represents polyisobutylene rubber. The aniline point of the softening agent (6) is 20. 5 °C and the plasticizer is DOP. Each dose of 3 MGy, 7MGy and 10 MGy was radiated to each sample of the blending examples. Hs (surface hardness) was measured according to JIS K 6263 and TSB (breaking strength) and ELB (breaking elongation) were measured according to JIS 6251, before and after the irradiation. The results were shown in table 3.

**Table 3**

| Blending examples | | 1 | 2 | 3 | 4 | 5 | 6 | 7 |
|---|---|---|---|---|---|---|---|---|
| Blank | H s | 51 | 50 | 55 | 63 | 46 | 69 | 49 |
| | T S | 17.9 | 13 | 17.9 | 14.8 | 17.4 | 18.8 | 16.2 |
| | E L | 700 | 610 | 720 | 690 | 820 | 640 | 760 |
| 3 MGy | Hs | 56 | 55 | 57 | 71 | 70 | 79 | 50 |
| | T S | 9.7 | 12.5 | 11.9 | 15.9 | 7.7 | 7.1 | 6.5 |
| | E L | 510 | 570 | 600 | 450 | 130 | 190 | 500 |
| 7 MGy | Hs | 68 | 51 | 53 | 77 | 85 | 88 | 44 |
| | T S | 7.2 | 8.4 | 9.1 | 20.2 | 6.2 | 6.6 | 6.2 |
| | E L | 220 | 260 | 270 | 170 | 70 | 80 | 810 |
| 10 MGy | H s | 7 3 | 44 | 49 | 81 | 88 | 91 | 32 |
| | T S | 6.8 | 7.3 | 8.3 | 25.8 | 5.5 | 5.9 | 4.7 |
| | E L | 120 | 200 | 190 | 140 | 50 | 40 | 990 |
| Judgement of Results about Radiation Resistance | | Good | Good | Good | Good | Deterioration Due to Hardening | Deterio-Ration Due to Hardening | Deterio-Ration Due to Softening |

According to the blending example 1, 85 weight parts of the second polymer component and 15 weight parts of the first polymer component were mixed to obtain mixture, to which 15 weight parts of the softening agent (6) was added. As a result, even after the sample is exposed to radiation of a dose of 10 MGy, the rise of the surface hardness and the reduction of the breaking strength and elongation were proved to be small.
According to the blending example 2, 60 weight parts of the second polymer component and 45 weight parts of the first polymer component were mixed to obtain mixture, to which 40 weight parts of the softening agent (6) and plasticizer (7) were added. As a result, even after the sample is exposed to radiation of a dose of 10 MGy, the rise of the surface hardness and the reduction of the breaking strength and elongation were proved to be small.

According to the blending example 3, 60 weight parts of the second polymer component and 40 weight parts of the first polymer component were mixed to obtain mixture, to which 30 weight parts of the softening agent (6) and plasticizer (7) were added. As a result, even after the sample is exposed to radiation of a dose of 10 MGy, the rise of the surface hardness and the reduction of the breaking strength and elongation were proved to be small.
According to the blending example 4, 93 weight parts of the second polymer component and 7 weight parts of the first polymer component were mixed to obtain mixture, to which 28 weight parts of the softening agent (6) and plasticizer (7) were added. As a result, even after the sample is exposed to radiation of a dose of 10 MGy, the rise of the surface hardness and the reduction of the breaking strength and elongation were proved to be small.

According to the blending example 5, 98 weight parts of the second polymer component and 2 weight parts of the first polymer component were mixed to obtain mixture, to which 40 weight parts of the softening agent and plasticizer were added. As a result, after the sample is exposed to radiation of a dose of 10 MGy, the rise of the surface hardness and the reduction of the breaking elongation were proved to be considerable.
According to the blending example 6, 65 weight parts of the second polymer component and 35 weight parts of the first polymer component were mixed to obtain mixture, to which 1 weight parts of the softening agent and plasticizer were added. As a result, after the sample is exposed to radiation of a dose of 10 MGy, the rise of the surface hardness and the reduction of the breaking strength and elongation were proved to be considerable.
According to the blending example 7, 25 weight parts of the second polymer component and 75 weight parts of the first polymer component were mixed to obtain mixture, to which 50 weight parts of the softening agent and plasticizer were added. As a result, after the sample is exposed to radiation of a dose of 10 MGy, the surface hardness was lowered, and the reduction of the breaking strength was considerable and the breaking elongation was slightly elevated.

As described above, it is proved that the deterioration of the surface hardness, breaking strength and breaking elongation can be prevented, even after the composition is exposed to a high level dose of radiation within a composition range according to the present invention.

The present invention provides for use of composition exhibiting high level of physical properties as shown in the above examples even after the composition is exposed to a high level dose of radiation, which is the first case in the world.

## Claims

1. Use of a radiation resistant cross linked polymer composition in nuclear related facilities such as nuclear power plants, facilities for reprocessing of used nuclear fuel and proton accelerators, wherein
the polymer composition comprises polymer components and a softening agent in an amount of 3 weight parts or more with respect to 100 weight parts of said polymer components, said polymer components comprising 3 to 70 weight parts of a first polymer component in the form of one or more of butyl rubber and polyisobutylene rubber, and 30 to 97 weight parts of a second polymer component in the form of one or more of chloroprene rubber and ethylene propylene rubber, said ethylene propylene rubber being either a two component copolymer of ethylene and propylene or a multicomponent polymer of ethylene, propylene and other monomer or monomers, the ethylene propylene rubber containing at least 30 mol% of ethylene units.

2. Use according to claim 1, wherein said softening agent has an aniline point of 60 °C or lower.

3. Use according to claim 1 or claim 2, wherein the softening agent has an aniline point of 45 °C or lower.

4. Use according to any one of claims 1 to 3, wherein said softening agent comprises a plasticizer of an aromatic carboxylic ester.

5. Use of a product comprising a polymer composition according to any one of the preceding claims, wherein the product is a distribution line, a power cable, a communication cable, a sheath, a water cut-off material or a packing.

## Patentansprüche

1. Verwendung einer strahlungsbeständigen vernetzten Polymerzusammensetzung in Einrichtungen in Zusammenhang mit Nuklearenergie, wie z.B. Atomkraftwerken, Einrichtungen zur Aufbereitung von abgebranntem Kernbrennstoff und Protonenbeschleunigern, wobei
die Polymerzusammensetzung Polymerkomponenten und einen Weichmacher in einer Menge von 3 Gewichtsteilen oder mehr, bezogen auf 100 Gewichtsteile der Polymerkomponenten, umfasst, wobei die Polymerkomponenten 3 bis 70 Gewichtsteile einer ersten Polymerkomponente in Form von einem oder mehreren aus Butylkautschuk und Polyisobutylenkautschuk und 30 bis 97 Gewichtsteile einer zweiten Polymerkomponente in Form von einem oder mehreren aus Chloroprenkautschuk und Ethylenpropylenkautschuk umfassen, wobei der Ethylenpropylenkautschuk entweder ein Zwei-Komponenten-Copolymer aus Ethylen und Propylen oder ein Mehrkomponentenpolymer aus Ethylen, Propylen und einem anderen Monomer oder anderen Monomeren ist und der Ethylenpropylenkautschuk zumindest 30 Mol-% Ethyleneinheiten enthält.

2. Verwendung nach Anspruch 1, wobei der Weichmacher einen Anilinpunkt von 60 °C oder weniger aufweist.

3. Verwendung nach Anspruch 1 oder Anspruch 2, wobei der Weichmacher einen Anilinpunkt von 45 °C oder weniger aufweist.

4. Verwendung nach einem der Ansprüche 1 bis 3, wobei der Weichmacher einen Weichmacher aus einem aromatischen Carbonsäureester umfasst.

5. Verwendung eines Produkts, das eine Polymerzusammensetzung nach einem der vorangegangenen Ansprüche umfasst, wobei das Produkt eine Verteilungsleitung, ein Stromkabel, ein Nachrichtenkabel, eine Ummantelung, ein wasserabsperrendes Material oder eine Verpackung ist.

## Revendications

1. Utilisation d'une composition de polymère réticulé résistant au rayonnement dans des aménagements liés aux nucléaires tels que les centrales nucléaires, des aménagements pour retraiter le combustible nucléaire usagé et les accélérateurs de protons, dans laquelle
la composition de polymère comprend des composants de polymère et un agent de ramollissement dans une quantité de 3 parties en poids ou plus pour 100 parties en poids desdits composants de polymère, lesdits composants de polymère comprenant 3 à 70 parties en poids d'un premier composant de polymère sous la forme d'un ou plusieurs éléments parmi un caoutchouc de butyle et un caoutchouc de poly(isobutylène), et 30 à 97 parties en poids d'un second composant de polymère sous la forme d'un ou plusieurs éléments parmi un caoutchouc de chloroprène et un caoutchouc d'éthylène-propylène, ledit caoutchouc d'éthylène-propylène étant soit un copolymère à deux composants d'éthylène et de propylène, soit un polymère multicomposants d'éthylène, de propylène ou d'un autre monomère et d'autres monomères, le caoutchouc d'éthylène-propylène contenant au moins 30 % en mol de motifs éthylène.

2. Utilisation selon la revendication 1, dans laquelle ledit agent de ramollissement a un point d'aniline de 60 °C ou moins.

3. Utilisation selon la revendication 1 ou la revendication 2, dans laquelle l'agent de ramollissement a un point d'aniline de 45 °C ou moins.

4. Utilisation selon l'une quelconque des revendications 1 à 3, dans laquelle ledit agent de ramollissement comprend un plastifiant d'un ester carboxylique aromatique.

5. Utilisation d'un produit comprenant une composition de polymère selon l'une quelconque des revendications précédentes, dans laquelle le produit est une ligne de distribution, un câble d'alimentation, un câble de communication, une gaine, un matériau protecteur hydrofuge ou une garniture.
